# EUROPEAN PATENT APPLICATION

(11) **EP 1 603 288 A2**
(43) Date of publication of application: **07.12.2005**
(21) Application number: 05011352.1
(22) Date of filing: 25.05.2005
(51) Int. Cl.: H04L 12/56

(54) **Active/standby switching system**

(30) Priority: 27.05.2004 JP 2004157902
(71) Applicant: NEC CORPORATION, Tokyo (JP)
(72) Inventor: Mochizuki, Koichi, Tokyo (JP)
(74) Representative: Glawe, Delfs, Moll

(57) **Abstract**

In a normal state before active/standby switching between an active system and a standby system, in an AAL2 cell assembling/disassembling processor 11 as the standby system, an ATM cell transmission/reception control portion 6 sends ATM cells to an AAL2 cell disassembling portion 8 and an AAL2 cell assembling portion 9. Therefore, in the standby system also, AAL2pf assembling buffer data and cell-to-cell stretch handover data are continuously held. When a switching start request is supplied from a host unit 1 and active/standby switching is carried out, a sequence number alone is transferred from the active system to the standby system.

## Description

This application claims priority to prior Japanese patent application JP 2004-157902, the disclosure of which is incorporated herein by reference.

### Background of the Invention:

This invention relates to an active/standby switching system which includes two AAL2 (ATM Adaptation Layer Type 2) cell assembling/disassembling processors as an active system and a standby system so that the active system and the standby system are switched between the two AAL2 cell assembling/disassembling processors.

In an ATM (Asynchronous Transfer Mode) exchange or the like, an AAL2 cell assembling/disassembling processor for assembling and disassembling ATM cells is used. However, if only one AAL cell assembling/disassembling processor is used, occurrence of a trouble will bring about system down of the ATM exchange. In view of the above, in order to improve the reliability of the ATM exchange, proposal has been made of an active/standby switching system having a dual-system structure including two AAL2 cell assembling/disassembling processors as an active system and a standby system.

In the above-mentioned active/standby switching system having a dual-system structure including two AAL2 cell assembling/disassembling processors as an active system and a standby system, it is desired, as customer requested specifications, to leave no residual cell upon active/standby switching and to reduce cell discard or cell loss due to expiry of a cell waiting time, thereby suppressing the influence upon a service.

In order to perform active/standby switching without cell loss, Japanese Unexamined Patent Application Publication (JP-A) No. 2004-40195 (corresp. to United States Patent Application Publication US 2004/0008620 A1) discloses an active/standby switching system and an active/standby switching method. In the conventional technique disclosed in the above-mentioned publication, AAL2 cell assembling/disassembling processors as an active system and a standby system are supplied with an active/standby switching start request from a host unit. In response to the active/standby switching start request, each of the active system and the standby system starts to store AAL2 cells. The active system transfers to the standby system handover information and uncompleted cell data in the course of disassembling. Between the active system and the standby system, negotiation is carried out to confirm that each system is in a switchable state. A new active system which has been the standby system is supplied with a cell conducting request. By the above-mentioned processing, active/standby switching without cell loss is realized in the active/standby switching system including the two AAL2 cell assembling/disassembling processors.

However, in the above-mentioned conventional technique, no cell is transmitted to an AAL2 cell disassembling portion at a later stage in the AAL2 cell assembling/disassembling processor as the standby system. Therefore, no synchronization is established between the active system and the standby system for AAL2pf (partial fill) assembling buffer data and cell-to-cell stretch handover data held by the AAL2 cell disassembling portion. Further, no synchronization is established between the active system and the standby system for a sequence number, as a number assuring the order of arrival of each ATM cell, supplied from an AAL2 cell assembling portion of the active system and written in an ATM cell header. Therefore, in the conventional technique, in order to establish synchronization between the active system and the standby system upon active/standby switching, the AAL2pf assembling buffer data, the cell-to-cell stretch handover data, and the sequence number must be transferred from the active system to the standby system as handover data upon active/standby switching. As a result, an active/standby switching time becomes very long so that cell loss occurs due to expiry of the cell waiting time.

In the above-mentioned conventional technique, if the active/standby switching time is long, inputATM cells supplied during active/standby switching must be continuously held in an input/output buffer for a long time in order to realize active/standby switching without cell loss. Therefore, the input/output buffer is required to have a very large capacity which may not be realized in view of a cost and an available memory size.

In the above-mentioned active/standby switching system, in order to switch the active system and the standby system without cell loss, the active/standby switching time is inevitably increased because the handover data, such as the AAL2pf assembling buffer data, the cell-to-cell stretch handover data, and the sequence number must be transferred from the active system to the standby system.

### Summary of the Invention:

It is therefore an object of this invention to provide an active/standby switching system capable of reducing an active/standby switching time so as to lower the possibility of occurrence of cell loss and to reduce a required capacity of an input/output buffer.

According to this invention, there is provided an active/standby switching system comprising two AAL2 cell assembling/disassembling processors as an active system and a standby system so that the active system and the standby system are switched between the two AAL2 cell assembling/disassembling processors, wherein each of the two AAL2 cell assembling/disassembling processors comprises:
an AAL2 cell disassembling portion supplied with AAL2 cells for disassembling the AAL2 cells into AAL2pf cells;
an AAL2 cell assembling portion supplied with AAL2pf cell data for assembling the AAL2pf cell data into AAL2 cell data;
an ATM cell transmission/reception control portion having an input/output buffer for storing ATM cells upon active/standby switching, the ATM cell transmission/reception control portion being operable as the active system to transmit ATM cells supplied from a host unit to the AAL2 cell disassembling portion or the AAL2 cell assembling portion in accordance with cell patterns, to multiplex ATM cells supplied from the AAL2 cell disassembling portion and the AAL2 cell assembling portion to produce multiplexed ATM cells, and to transmit the multiplexed ATM cells to the host unit, the ATM cell transmission/reception control portion as the standby system being operable to transmit the ATM cells supplied from the host unit to the AAL2 cell disassembling portion or the AAL2 cell assembling portion in accordance with the cell patterns and to discard the ATM cells supplied from the AAL2 cell disassembling portion and the AAL2 cell assembling portion, the ATM cell transmission/reception control portion starting to store the ATM cells supplied from the host unit in the input/output buffer when an active/standby switching request is supplied from the host unit, the ATM cell transmission/reception control portion transmitting the ATM cells stored in the input/output buffer to the AAL2 cell disassembling portion or the AAL2 cell assembling portion and then starting to operate as the active system when a cell conducting request is received after active/standby switching is performed, the ATM cell transmission/reception control portion starting to operate as the standby system when a cell discard request is received after active/standby switching is performed; and
an active/standby switching control portion connected to that of the other of the two AAL2 cell assembling/disassembling processors via a transmission path, the active/standby switching control portion being operable, upon detecting that the active/standby switching start request is transmitted from the host unit to the ATM cell transmission/reception control portion, to perform negotiation with that of the other of the two AAL2 cell assembling/disassembling processors via the transmission path and to judge whether or not active/standby switching is to be carried out, the active/standby switching control portion being operable, upon carrying out active/standby switching, to transmit to that of the other of the two AAL2 cell assembling/disassembling processors a sequence number assuring the order of arrival of each ATM cell and supplied from the AAL2 cell assembling portion as handover data when operated as the active system, to transfer to the AAL2 cell assembling portion of each of the two AAL2 cell assembling/disassembling processors the sequence number transmitted from the active/standby switching control portion of the other of the two AAL2 cell assembling/disassembling processors as handover data when operated as the standby system, to transmit the cell conducting request to the ATM cell transmission/reception control portion if each of the two AAL2 cell assembling/disassembling processors is to be operated as a new active system, and to transmit the cell discard request to the ATM cell transmission/reception control portion if each of the two AAL2 cell assembling/disassembling processors is to be operated as a new standby system.

According to this invention, also in a normal state before receiving the active/standby switching start request from the host unit, in the standby system, the ATM cell transmission/reception control portion supplies the ATM cells to the AAL2 cell disassembling portion or the AAL2 cell assembling portion. Therefore, in the standby system also, the AAL2pf assembling buffer data and the cell-to-cell stretch handover data are continuously held. Therefore, when the active/standby switching start request is supplied from the host unit and active/standby switching is carried out, the sequence number alone is transmitted from the active system to the standby system as the handover data. Thus, the handover data to be transmitted upon active/standby switching are reduced and the active/standby switching time is shortened. Accordingly, the probability of occurrence of cell loss due to expiry of the cell waiting time is lowered and the required capacity of the input/output buffer is reduced.

According to this invention, there is also provided an active/standby switching system comprising two AAL2 cell assembling/disassembling processors as an active system and a standby system so that the active system and the standby system are switched between the two AAL2 cell assembling/disassembling processors, wherein each of the two AAL2 cell assembling/disassembling processors comprises:
an AAL2 cell disassembling portion supplied with AAL2 cells for disassembling the AAL2 cells into AAL2pf cells;
an AAL2 cell assembling portion supplied with AAL2pf cell data for assembling the AAL2pf cell data into AAL2 cell data;
an ATM cell transmission/reception control portion operable as the active system to transmit ATM cells supplied from a host unit to the AAL2 cell disassembling portion or the AAL2 cell assembling portion in accordance with cell patterns, to multiplex ATM cells supplied from the AAL2 cell disassembling portion and the AAL2 cell assembling portion to produce multiplexed ATM cells, and to transmit the multiplexed ATM cells to the host unit, the ATM cell transmission/reception control portion as the standby system being operable to transmit the ATM cells supplied from the host unit to the AAL2 cell disassembling portion or the AAL2 cell assembling portion in accordance with the cell patterns and to discard the ATM cells supplied from the AAL2 cell disassembling portion and the AAL2 cell assembling portion, the ATM cell transmission/reception control portion starting to operate as the active system when a cell conducting request is received after active/standby switching is performed, the ATM cell transmission/reception control portion starting to operate as the standby system when a cell discard request is received after active/standby switching is performed; and
an active/standby switching control portion connected to that of the other of the two AAL2 cell assembling/disassembling processors via a transmission path, the active/standby switching control portion being operable, upon detecting that an active/standby switching start request is transmitted from the host unit to the ATM cell transmission/reception control portion, to perform negotiation with that of the other of the two AAL2 cell assembling/disassembling processors via the transmission path and to judge whether or not active/standby switching is to be carried out, the active/standby switching control portion being operable to transmit the cell conducting request to the ATM cell transmission/reception control portion if each of the two AAL2 cell assembling/disassembling processors is to be operated as a new active system and to transmit the cell discard request to the ATM cell transmission/reception control portion if each of the two AAL2 cell assembling/disassembling processors is to be operated as a new standby system.

In this invention, the cells are conducted to the AAL2 cell assembling portion and the AAL cell disassembling portion of the standby system. Therefore, the AAL2 cell assembling portion and the AAL cell disassembling portion in the active system hold substantially same data as those held in the AAL2 cell assembling portion and the AAL cell disassembling portion in the standby system, respectively. It is therefore possible to minimize the handover data to be transferred upon active/standby switching and to reduce the required capacity of the input/output buffer in the ATM cell transmission/reception control portion for storing the cells during active/standby switching.

Preferably, in the active/standby switching system, the active/standby switching control portion of each of the two AAL2 cell assembling/disassembling processors confirms presence or absence of residual cells in the ATM cell transmission/reception control, the AAL2 cell disassembling, and the AAL2 cell assembling portions of each of the two AAL2 cell assembling/disassembling processors upon carrying out negotiation for active/standby switching with the active/standby switching control portion of the other of the two AAL2 cell assembling/disassembling processors, the active/standby switching control portion of each of the two AAL2 cell assembling/disassembling processors carrying out active/standby switching after confirming absence of the residual cells.

As described above, according to this invention, upon active/standby switching, the AAL2pf assembling buffer data and the cell-to-cell stretch handover data need not be transferred from the active system to the standby system. Therefore, it is possible to shorten the active/standby switching time and a cell residence (or retention) time.

### Brief Description of the Drawing:

Fig. 1 is a block diagram of an active/standby switching system according to an embodiment of this invention;
Fig. 2 is a flow chart for describing an active/standby switching operation of the active/standby switching system in Fig. 1; and
Figs. 3 to 8 are views for describing a plurality of steps of the active/standby switching operation.

### Description of the Preferred Embodiment:

Now, description will be made of an embodiment of this invention with reference to the drawing.

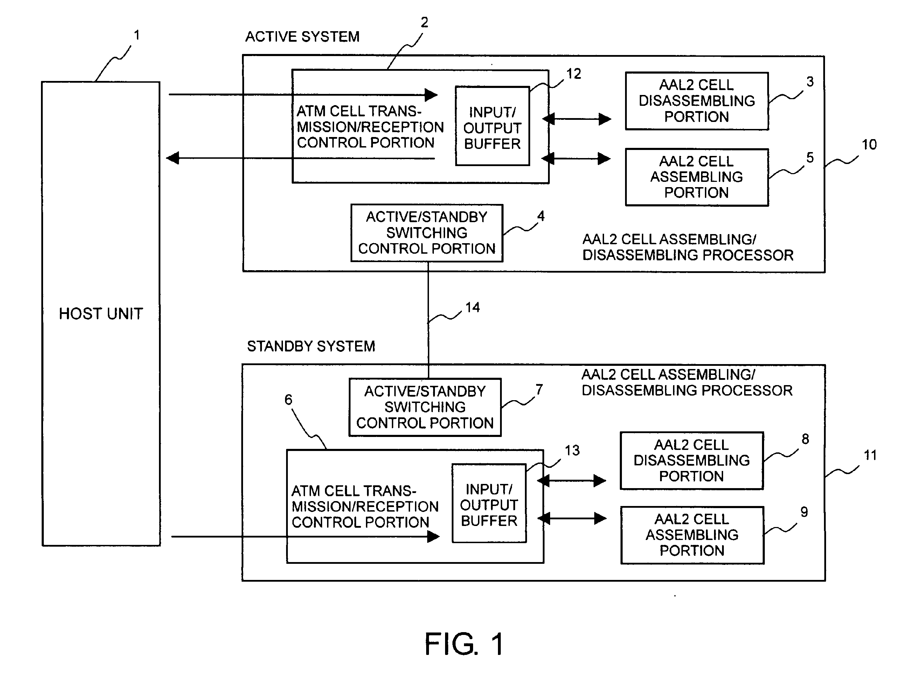

Referring to Fig. 1, an active/standby switching system according to the embodiment comprises an AAL2 cell assembling/disassembling processor 10 as an active system and an AAL2 cell assembling/disassembling processor 11 as a standby system. The active/standby switching system transmits and receives ATM cells to and from a host unit 1.

in Fig. 1, the host unit 1 sends an active/standby switching start request to each of the AAL2 cell assembling/disassembling processors 10 and 11 as the active system and the standby system. In response to the request, storage of AAL2 cells is started in each of the active system and the standby system. Handover information is transferred from the active system to the standby system. Between the active system and the standby system, negotiation is carried out to confirm that the active system and the standby system are in a switchable state. A new active system (which has been the standby system) is supplied with a cell conducting request. In the above-mentioned manner, active/standby switching is carried out without cell loss.

The AAL2 assembling/disassembling processor 10 as the active system comprises an ATM cell transmission/reception control portion 2, an AAL2 cell disassembling portion 3, an AAL2 cell assembling portion 5, and an active/standby switching control portion 4. The AAL2 assembling/disassembling processor 11 as the standby system comprises an ATM cell transmission/reception control portion 6, an AAL2 cell disassembling portion 8, an AAL2 cell assembling portion 9, and an active/standby switching control portion 7. TheATM cell transmission/reception control portion 2 is provided with an input/output buffer 12. The ATM cell transmission/reception control portion 6 is provided with an input/output buffer 13. The active/standby switching control portions 4 and 7 are connected to each other via a transmission path 14.

Herein, the AAL2 cell assembling/disassembling processors 10 and 11 are described as the active system and the standby system, respectively. It is noted here that, if active/standby switching is carried out between the AAL2 cell assembling/disassembling processors 10 and 11, the active system and the standby system are exchanged. The AAL2 cell assembling/disassembling processors 10 and 11 are quite same in structure. Therefore, description of each component will be made in conjunction with the AAL2 cell assembling/disassembling processor 10 as the active system and a reference numeral of each component of the AAL2 cell assembling/disassembling processor 11 is shown in parentheses.

The ATM cell transmission/reception control portion 2 (6) disassembles ATM cells supplied from the host unit 1 and multiplexes ATM cells supplied from the ATM cell assembling portion 5 (9) and the ATM cell disassembling portion 3 (8) with priority control. The input/output buffer 12 (13) of the ATM cell transmission/reception control portion 2 (6) serves to store the ATM cells upon active/standby switching in order to prevent occurrence of cell loss.

When operated as the active system, the ATM cell transmission/reception control portion 2 (6) transmits the ATM cells supplied from the host unit 1 to the AAL2 cell disassembling portion 3 (8) or the AAL2 cell assembling portion 5 (9) in accordance with cell pattems. Further, the ATM cell transmission/reception control portion 2 (6) multiplexes the ATM cells from the AAL2 cell disassembling portion 3 (8) and the AAL2 cell assembling portion 5 (9) and then transmits multiplexed ATM cells to the host unit 1.

On the other hand, when operated as the standby system, the ATM cell transmission/reception control portion 2 (6) transmits the ATM cells supplied from the host unit 1 to the AAL2 cell disassembling portion 3 (8) or the AAL2 cell assembling portion 5 (9) in accordance with the cell patterns. Further, the ATM cell transmission/reception control portion 2 (6) discards the ATM cells from the AAL2 cell disassembling portion 3 (8) and the AAL2 cell assembling portion 5 (9).

Receiving the active/standby switching start request from the host unit 1, the ATM cell transmission/reception control portion 2 (6) starts to store the ATM cells supplied from the host unit 1 in the input/output buffer 12 (13). Supplied with the cell conducting request from the active/standby switching control portion 4 (7) after active/standby switching is carried out, the ATM cell transmission/reception control portion 2 (6) transmits the ATM cells stored in the input/output buffer 12 (13) to the AAL2 cell disassembling portion 3 (8) or the AAL2 cell assembling portion 4 (9) and then starts to operate as the active system. Supplied with a cell discard request, the ATM cell transmission/reception control portion 2 (6) starts to operate as the standby system.

The AAL2 cell disassembling portion 3 (8) judges whether the ATM cells received from the ATM cell transmission/reception control portion 2 (6) are AAL2 cells or other cells than the AAL2 cells and disassembles the AAL2 cells into AAL2pf (partial fill) cells. Specifically, the AAL2 cell disassembling portion 3 (8) disassembles/assembles a plurality of short cells multiplexed in the AAL2 cells and converts the short cells into AAL2pf cell data. In case where the ATM cells received from the ATM cell transmission/reception control portion 2 (6) are cell data other than the AAL2 cells, the AAL2 cell disassembling portion 3 (8) converts ATM headers alone.

The AAL2 cell assembling portion 5 (9) judges whether the ATM cells received from the ATM cell transmission/reception control portion 2 (6) are AALpf cells or other cells than the AAL2pf cells and assembles the AAL2pf cell data into the AAL2 cell data. Specifically, the AAL2 cell assembling portion 5 (9) disassembles/assembles a plurality of short cells multiplexed in the AAL2pf cells and converts the short cells into the AAL2 cell data. In case where the ATM cells received from the ATM cell transmission/reception control portion 2 (6) are cell data other than the AAL2pf cells, the AAL2 cell assembling portion 5 (9) converts ATM headers alone.

The active/standby switching portion 4 (7) is connected to the active/standby switching portion 7 (4) of the other system via the transmission path 14. Upon detecting that the active/standby switching start request is transmitted from the host unit 1 to the ATM cell transmission/reception control portion 2 (6), the active/standby switching portion 4 (7) performs negotiation with the active/standby switching portion 7 (4) of the other system via the transmission path 14 and judges whether or not active/standby switching is to be carried out. Upon carrying out active/standby switching, the active/standby switching control portion 4 (7) carries out following operations depending upon the situations. When operated as the active system, the active/standby switching control portion 4 (7) transmits to the active/standby switching control portion 7 (4) of the other system a sequence number (a number assuring the order of arrival of each ATM cell) supplied from the AAL2 cell assembling portion 5 (9) as handover data. When operated as the standby system, the active/standby switching control portion 4 (7) transfers to the AAL2 cell assembling portion 5 (9) of this processor the sequence number transmitted from the active/standby switching control portion 7 (4) of the other system as handover data. When this system is to be operated as a new active system, the active/standby switching control portion 4 (7) transmits the cell conducting request to the ATM cell transmission/reception control portion 2 (6). When this system is to be operated as a new standby system, the active/standby switching control portion 4 (7) transmits the cell discard request to the ATM cell transmission/reception control portion 2 (6).

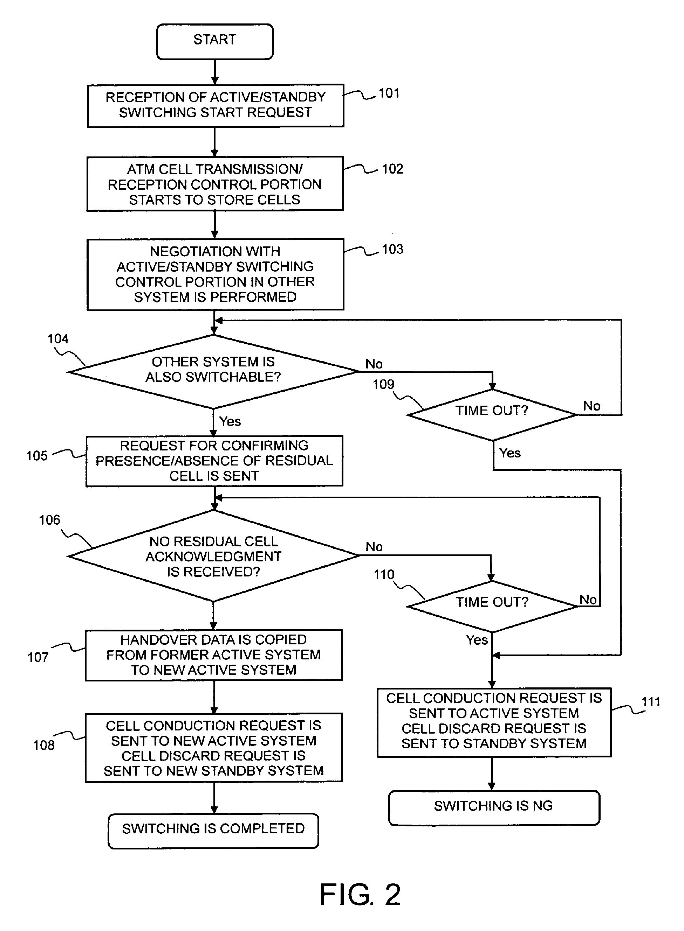

Next referring to Figs. 2 through 8, the operation of the active/standby switching system of this embodiment will be described in detail.

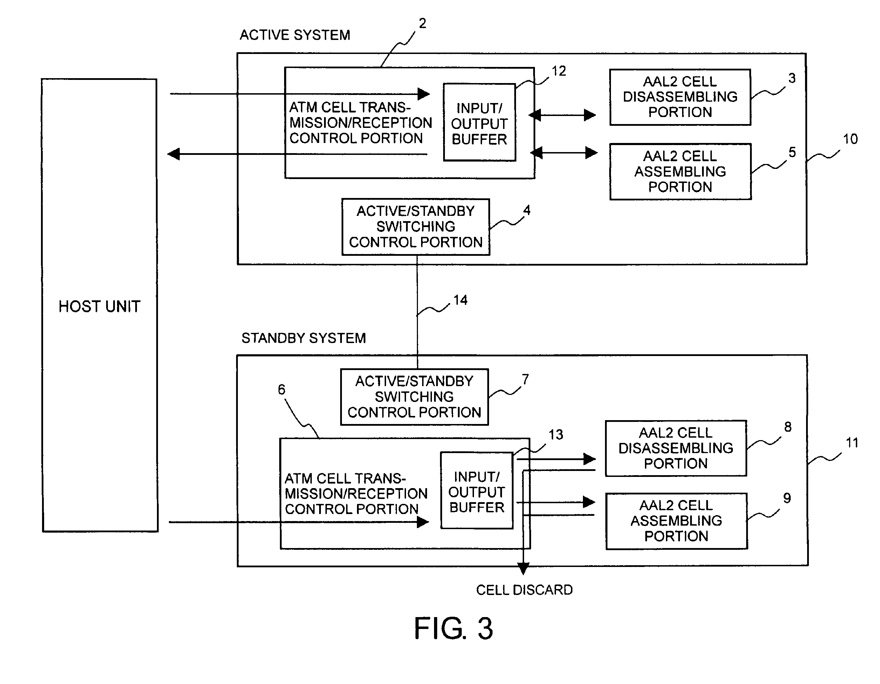

At first, Fig. 3 shows a normal state before the active/standby switching request is transmitted from the host unit 1 to the AAL2 cell assembling/disassembling processors 10 and 11.

In the normal state before the active/standby switching request is transmitted from the host unit 1 to the AAL2 cell assembling/disassembling processors 10 and 11, the AAL2 cell assembling/disassembling processors 10 and 11 as the active system and the standby system receive the same ATM cells copied by the host unit 1.

In the AAL2 cell assembling/disassembling processor 10 as the active system, the ATM cell transmission/reception control portion 2 receives the ATM cells supplied from the host unit 1 and transmits the ATM cells to the AAL2 cell disassembling portion 3 or the AAL2 cell assembling portion 2 at a later stage. In the AAL2 cell assembling/disassembling processor 10, in the normal state, the ATM cells processed by the AAL2 cell disassembling portion 3 and the AAL2 cell assembling portion 5 are supplied again to the ATM cell transmission/reception control portion 2 to be transmitted to the host unit 1.

In the AAL2 cell assembling/disassembling processor 11 as the standby system, in the normal state, the ATM cell transmission/reception control portion 6 continuously discards the ATM cells processed by the AAL2 cell disassembling portion 8 and the AAL cell assembling portion 9.

In the normal state in which the above-mentioned operation is carried out, it is assumed that the host unit 1 transmits the active/standby switching start request to the AAL2 cell assembling/disassembling processors 10 and 11 as the active system and the standby system. In this event, the operation illustrated in Fig. 2 is started.

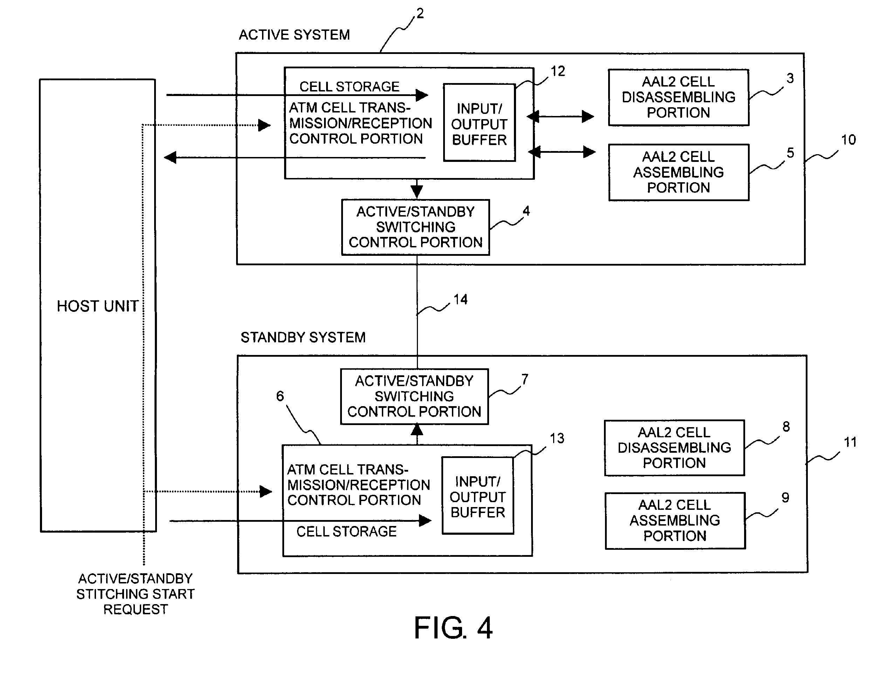

Like other ATM cells, the active/standby switching start request from the host unit 1 is transmitted to the AAL2 cell assembling/disassembling processors 10 and 11 as the active system and the standby system (step 101). Supplied with the active/standby switching start request, the ATM cell transmission/reception control portions 2 and 6 in the active system and the standby system send a preliminary notice of switching to the active/standby switching control portions 4 and 7, respectively, and start to store the ATM cells by the use of the input/output buffers 12 and 13 as shown in Fig. 4 (step 102).

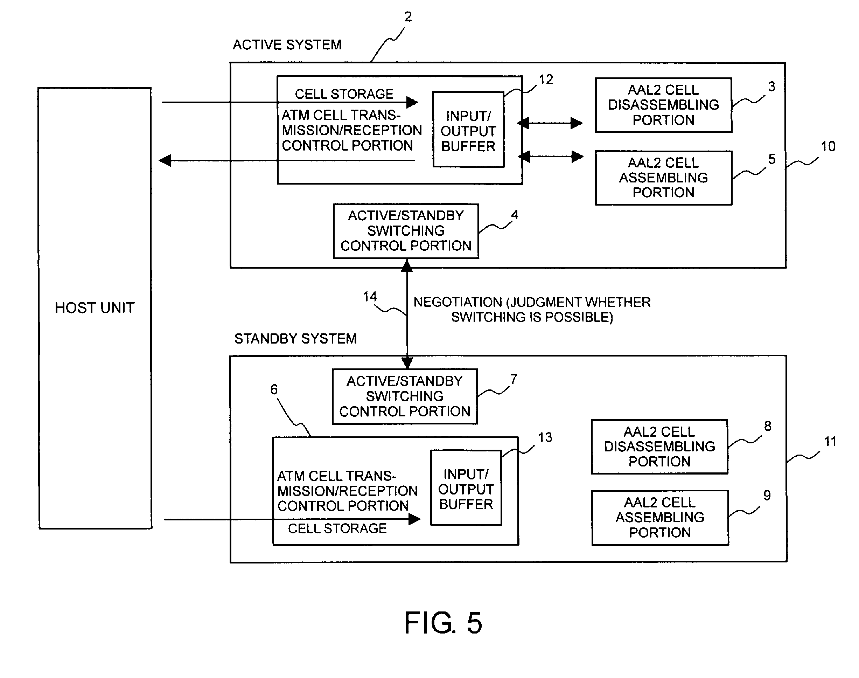

Next, negotiation is performed between the active/standby switching control portions 4 and 7 in the active system and the standby system as illustrated in Fig. 5 (step 103). The active/standby switching control portions 4 and 7 mutually confirm that the active/standby switching control portions 4 and 7 have received the preliminary notice of switching (step 104). If reception of the preliminary notice of switching is confirmed in both of the active system and the standby system, operation proceeds to a residual cell confirming step.

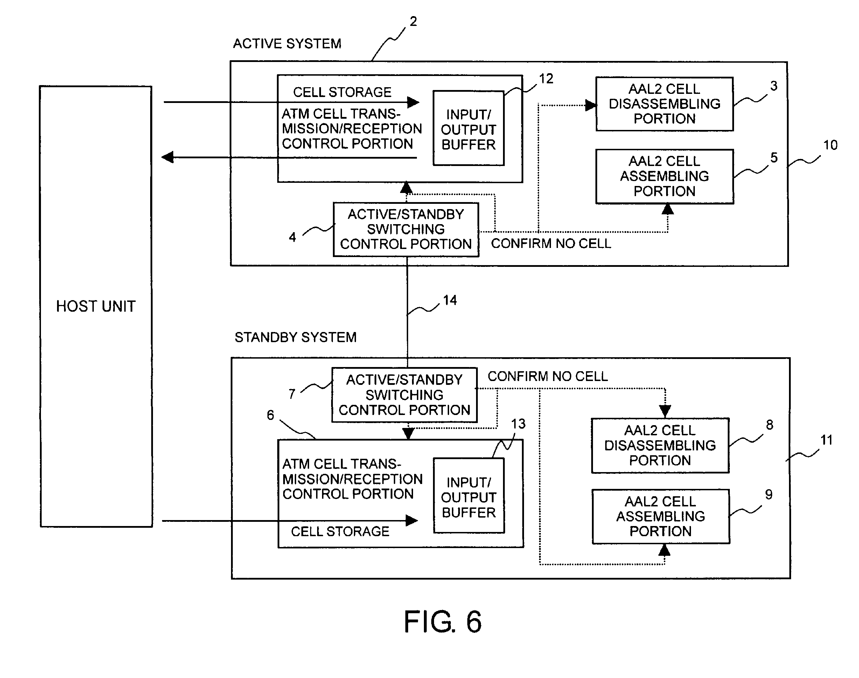

In the residual cell confirming step, the active/standby switching control portions 4 and 7 in the active system and the standby system confirm presence or absence of residual cells in the ATM cell transmission/reception control portions 2 and 6, the AAL2 cell disassembling portions 3 and 8, and the AAL2 cell assembling portions 5 and 9, respectively, as shown in Fig. 6 (step 105). When the active/standby switching control portions 4 and 7 In the active system and the standby system receive acknowledgement confirming absence of residual cells from the ATM cell transmission/reception control portions 2 and 6, the AAL2 cell disassembling portions 3 and 8, the AAL2 cell assembling portions 5 and 9 (step 106), operation proceeds to a handover data transmitting step.

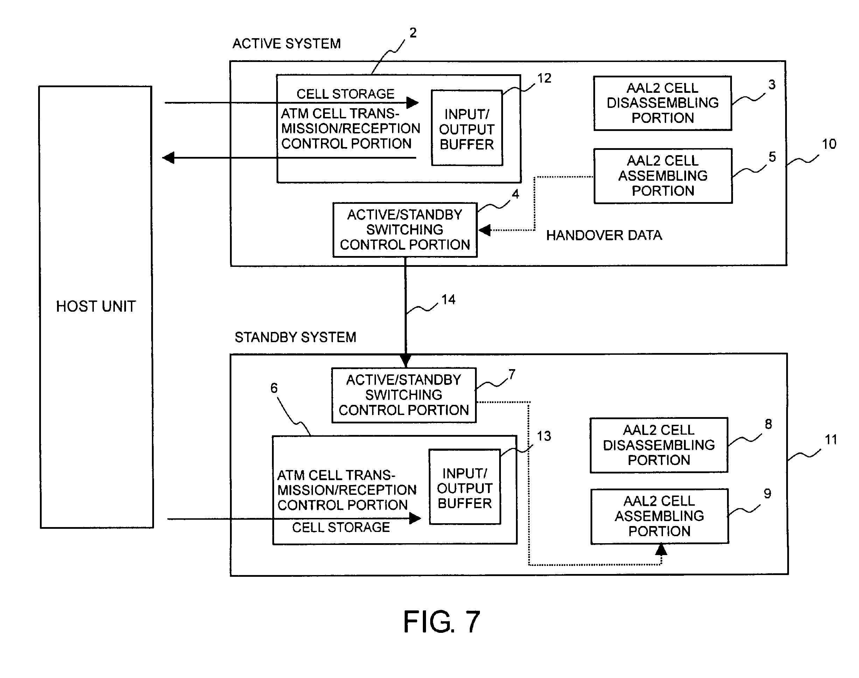

In the handover data transmitting step, the AAL2 cell assembling portion 5 in the active system transfers the sequence number (the number assuring the order of arrival of each ATM cell and written in the ATM cell header) to the active/standby switching control portion 4 as handover data. The handover data are transferred via the transmission path 14 and the active/standby switching control portion 7 in the standby system to the AAL2 cell assembling portion 9 in the standby system (step 107). Fig. 7 shows the state where the handover data transmitting step is carried out.

In this embodiment, also in the normal state before the active/standby switching start request Is supplied from the host unit 1, in the AAL2 cell assembling/disassembling processor 11 as the standby system, the ATM cell transmission/reception control portion 6 delivers the ATM cells to the AAL2 cell disassembling portion 8 and the AAL2 cell assembling portion 9. Accordingly, the AAL2pf assembling buffer data and the cell-to-cell stretch handover data are continuously held in the standby system also. Thus, in this embodiment, only the sequence number is transferred from the active system to the standby system as the handover data upon carrying out active/standby switching.

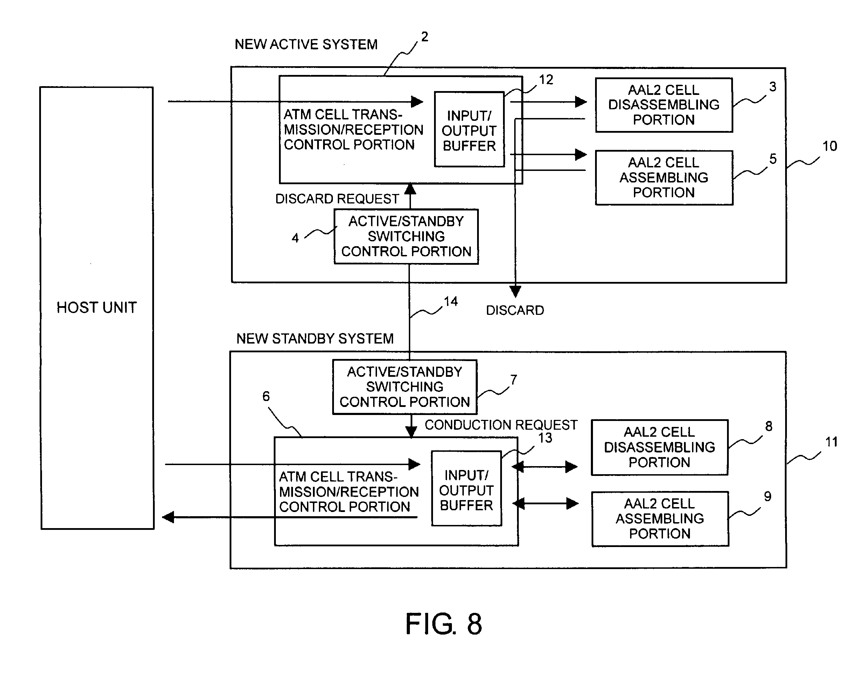

After completion of transfer of the handover data, in the standby system, the active/standby switching control portion 7 sends the cell conducting request to the ATM cell transmission/reception control portion 6. Supplied with the cell conducting request, the ATM cell transmission/reception control portion 6, starts to transmit the ATM cells stored In the input/output buffer 13 to the AAL2 cell disassembling portion 8 and the AAL2 cell assembling portion 9 at the later stage. Consequently, the AAL2 cell assembling/disassembling processor 11 is operated as a new active system (former standby system) as shown in Fig. 8 (step 108).

After completion of transfer of the handover data, in the active system, the active/standby switching control portion 4 sends the cell discard request to the ATM cell transmission/reception control portion 2. Supplied with the,cell discard request, the ATM cell transmission/reception control portion 2 cancels a cell storing state and discards the ATM cells supplied from the AAL2 cell disassembling portion 3 and the AAL2 cell assembling portion 5 at the later stage. Consequently, the AAL2 cell assembling/disassembling processor 10 is operated as a new standby system (former active system) as shown in Fig. 8 (step 108).

If a predetermined time elapses in the steps 104 and 106 as time out (steps 109 and 110), the active/standby switching control portions 4 and 7 judge that active/standby switching is impossible. In this event, the active/standby switching control portion 4 sends the cell conducting request to the ATM cell transmission/reception control portion 2 in order to continue the operation as the active system while the active/standby switching control portion 7 sends the cell discard request to the ATM cell transmission/reception control portion 6 in order to continue the operation as the standby system (step 111).

By the above-mentioned operation, in the active/standby switching system in this embodiment, the ATM cell transmission/reception control portions 2 and 6 are put into the cell storing state upon active/standby switching in the manner similar to the conventional technique. Thus, the ATM cells supplied from the host unit 1 in a transitional phase of active/standby switching are stored in the input/output buffers 12 and 13. After completion of active/standby switching, transmission of the ATM cells stored in the new active system is started. In this manner, active/standby switching without cell loss is realized.

In the manner similar to the conventional technique, the handover data are transferred from the active system to the standby system during active/standby switching. After active/standby switching, the ATM cells are assembled in the new active system according to the handover data.

However, in this embodiment, also in the normal state before the host unit 1 transmits the active/standby switching start request to the AAL2 cell assembling/disassembling processors 10 and 11, in the AAL2 cell assembling/disassembling processor 11 as the standby system, the ATM cell transmission/reception control portion 6 delivers the ATM cells to the AAL2 cell disassembling portion 8 and the AAL2 cell assembling portion 9. Therefore, also in the standby system, the AAL2pf assembling buffer data and the cell-to-cell stretch handover data are continuously held. Accordingly, when the active/standby switching start request is supplied from the host unit 1 and active/standby switching is carried out, the sequence number alone is transferred from the active system to the standby system as the handover data. Thus, the handover data to be transferred upon active/standby switching are reduced so that the active/standby switching time is shortened. The probability of occurrence of cell loss due to expiry of the cell waiting time is reduced and the required capacity of the input/output buffer is reduced.

In the above-mentioned active/standby switching system according to this embodiment, in the state where the ATM cells are stored in the input/output buffers 12 and 13 and are not sent to the later stage, the sequence number (the number assuring the order of arrival of each ATM cell and written in the ATM cell header) as the handover data upon active/standby switching is transferred from the active system to the standby system in order to establish synchronization between the active system and the standby system.

As another embodiment of this invention, synchronization between ATM cell flow rates from the ATM cell transmission/reception control portions 2 and 6 in the active system and the standby system may be continuously and constantly established via the active/standby switching control portions 4 and 7. In this event, no handover data is required to be transferred upon active/standby switching at all. In this case, however, a processing time for establishing synchronization of the ATM cell flow rates is required so that limitation is imposed upon a cell transmission rate to the later stage. Therefore, it is required that the cell flow rate is low. In order to realize the above-mentioned operation, for example, the active/standby switching control portion 4 is given an additional function of adjusting the cell flow rate. Upon active/standby switching, the ATM cell flow rate from the ATM cell transmission/reception control portion 2 of this system is constantly synchronized with the ATM cell flow rate from the ATM cell transmission/reception control portion 6 of the other system via the active/standby switching control portion 7 of the other system.

While the present invention has thus far been described in connection with the preferred embodiment thereof, it will readily be possible for those skilled in the art to put this invention into practice in various other manners.

## Claims

1. An active/standby switching system comprising two AAL2 cell assembling/disassembling processors as an active system and a standby system so that the active system and the standby system are switched between the two AAL2 cell assembling/disassembling processors, wherein each of said two AAL2 cell assembling/disassembling processors comprises:
an AAL2 cell disassembling portion supplied with AAL2 cells for disassembling the AAL2 cells into AAL2pf cells;
an AAL2 cell assembling portion supplied with AAL2pf cell data for assembling the AAL2pf cell data into AAL2 cell data;
an ATM cell transmission/reception control portion having an input/output buffer for storing ATM cells upon active/standby switching, the ATM cell transmission/reception control portion being operable as the active system to transmitATM cells supplied from a host unit to the AAL2 cell disassembling portion or the AAL2 cell assembling portion in accordance with cell patterns, to multiplex ATM cells supplied from the AAL2 cell disassembling portion and the AAL2 cell assembling portion to produce multiplexed ATM cells, and to transmit the multiplexed ATM cells to the host unit, the ATM cell transmission/reception control portion as the standby system being operable to transmit the ATM cells supplied from the host unit to the AAL2 cell disassembling portion or the AAL2 cell assembling portion in accordance with the cell patterns and to discard the ATM cells supplied from the AAL2 cell disassembling portion and the AAL2 cell assembling portion, the ATM cell transmission/reception control portion starting to store the ATM cells supplied from the host unit in the input/output buffer when an active/standby switching request is supplied from the host unit, the ATM cell transmission/reception control portion transmitting the ATM cells stored in the input/output buffer to the AAL2 cell disassembling portion or the AAL2 cell assembling portion and then starting to operate as the active system when a cell conducting request is received after active/standby switching is performed, the ATM cell transmission/reception control portion starting to operate as the standby system when a cell discard request is received after active/standby switching is performed; and
an active/standby switching control portion connected to that of the other of said two AAL2 cell assembling/disassembling processors via a transmission path, the active/standby switching control portion being operable, upon detecting that the active/standby switching start request is transmitted from the host unit to the ATM cell transmission/reception control portion, to perform negotiation with that of the other of said two AAL2 cell assembling/disassembling processors via the transmission path and to judge whether or not active/standby switching is to be carried out, the active/standby switching control portion being operable, upon carrying out active/standby switching, to transmit to that of the other of said two AAL2 cell assembling/disassembling processors a sequence number assuring the order of arrival of each ATM cell and supplied from the AAL2 cell assembling portion as handover data when operated as the active system, to transfer to the AAL2 cell assembling portion of said each of the two AAL2 cell assembling/disassembling processors the sequence number transmitted from the active/standby switching control portion of the other of said two AAL2 cell assembling/disassembling processors as handover data when operated as the standby system, to transmit the cell conducting request to the ATM cell transmission/reception control portion if said each of the two AAL2 cell assembling/disassembling processors is to be operated as a new active system, and to transmit the cell discard request to the ATM cell transmission/reception control portion if said each of the two AAL2 cell assembling/disassembling processors is to be operated as a new standby system.

2. An active/standby switching system as claimed in claim 1, wherein the active/standby switching control portion of said each of the two AAL2 cell assembling/disassembling processors confirms presence or absence of residual cells in the ATM cell transmission/reception control, the AAL2 cell disassembling, and the AAL2 cell assembling portions of said each of the two AAL2 cell assembling/disassembling processors upon carrying out negotiation for active/standby switching with the active/standby switching control portion of the other of said two AAL2 cell assembling/disassembling processors, the active/standby switching control portion of said each of the two AAL2 cell assembling/disassembling processors carrying out active/standby switching after confirming absence of the residual cells.

3. An active/standby switching system comprising two AAL2 cell assembling/disassembling processors as an active system and a standby system so that the active system and the standby system are switched between the two AAL2 cell assembling/disassembling processors, wherein each of said two AAL2 cell assembling/disassembling processors comprises:
an AAL2 cell disassembling portion supplied with AAL2 cells for disassembling the AAL2 cells into AAL2pf cells;
an AAL2 cell assembling portion supplied with AAL2pf cell data for assembling the AAL2pf cell data into AAL2 cell data;
an ATM cell transmission/reception control portion operable as the active system to transmit ATM cells supplied from a host unit to the AAL2 cell disassembling portion or the AAL2 cell assembling portion in accordance with cell patterns, to multiplex ATM cells supplied from the AAL2 cell disassembling portion and the AAL2 cell assembling portion to produce multiplexed ATM cells, and to transmit the multiplexed ATM cells to the host unit, the ATM cell transmission/reception control portion as the standby system being operable to transmit the ATM cells supplied from the host unit to the AAL2 cell disassembling portion or the AAL2 cell assembling portion in accordance with the cell patterns and to discard the ATM cells supplied from the AAL2 cell disassembling portion and the AAL2 cell assembling portion, the ATM cell transmission/reception control portion starting to operate as the active system when a cell conducting request is received after active/standby switching is performed, the ATM cell transmission/reception control portion starting to operate as the standby system when a cell discard request is received after active/standby switching is performed; and
an active/standby switching control portion connected to that of the other of said two AAL2 cell assembling/disassembling processors via a transmission path, the active/standby switching control portion being operable, upon detecting that an active/standby switching start request is transmitted from the host unit to the ATM cell transmission/reception control portion, to perform negotiation with that of the other of said two AAL2 cell assembling/disassembling processors via the transmission path and to judge whether or not active/standby switching is to be carried out, the active/standby switching control portion being operable to transmit the cell conducting request to the ATM cell transmission/reception control portion if said each of the two AAL2 cell assembling/disassembling processors is to be operated as a new active system and to transmit the cell discard request to the ATM cell transmission/reception control portion if said each of the two AAL2 cell assembling/disassembling processors is to be operated as a new standby system.

4. An active/standby switching system as claimed in claim 3, wherein the active/standby switching control portion of said each of the two AAL2 cell assembling/disassembling processors confirms presence or absence of residual cells in the ATM cell transmission/reception control, the AAL2 cell disassembling, and the AAL2 cell assembling portions of said each of the two AAL2 cell assembling/disassembling processors upon carrying out negotiation for active/standby switching with the active/standby switching control portion of the other of said two AAL2 cell assembling/disassembling processors, the active/standby switching control portion of said each of the two AAL2 cell assembling/disassembling processors carrying out active/standby switching after confirming absence of the residual cells.
